# EUROPÄISCHE PATENTSCHRIFT

(11) **EP 4 164 911 B1**
(45) Veröffentlichungstag und Bekanntmachung des Hinweises auf die Patenterteilung: **24.07.2024**
(21) Anmeldenummer: 21721014.5
(22) Anmeldetag: 19.04.2021
(51) Int. Cl.: B60K 35/00, B60K 37/00

(54) **BEDIENEINHEIT FÜR EIN FAHRZEUG**
OPERATING UNIT FOR A VEHICLE
UNITÉ DE COMMANDE POUR UN VÉHICULE

(30) Priorität: 16.06.2020 DE 102020115847
(43) Veröffentlichungstag der Anmeldung: 19.04.2023
(73) Patentinhaber: BHTC GmbH, 59557 Lippstadt (DE)
(72) Erfinder: FUST, Winfried, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2021/060117
(87) Internationale Veröffentlichungsnummer: WO 2021/254676

(56) Entgegenhaltungen:
- DE-A1- 102005 049 848
- DE-A1- 102017 222 601

## Beschreibung

Die Erfindung betrifft eine Bedieneinheit für ein Fahrzeug und insbesondere eine Bedieneinheit für ein Fahrzeug mit verbesserter Parallelführung eines großflächigen Bedienelements.

Moderne Bedienkonzepte für Fahrzeuge weisen Bedieneinheiten mit vergleichsweise großflächigen Touch-Displays auf. Da die Berührung der Display-Oberfläche (Bedienoberfläche) allein dem Benutzer nicht zwingend signalisiert, ob die gewünschte Bedienfunktion vom System angenommen worden ist, ist man bestrebt, dem Bediener eine optische, akustische oder taktile Rückmeldung als Quittierung der Annahme des Eingabebefehls zu geben. Insbesondere als "haptisches Feedback" bekannte Rückmeldungskonzepte haben sich, weil komfortabel, als vorteilhaft erwiesen. Man unterscheidet dabei zwischen passivem und aktivem haptischen Feedback. Ein aktives haptisches Feedback erfordert eine aktive impulsartige mechanische Anregung des Bedienelements (Display), was sowohl hinsichtlich der Aktuatorik als auch der Dämpfung von ungewollten Schwingungen konstruktiv aufwendig sein kann. Insoweit vorteilhaft ist das sogenannte passive haptische Feedback, bei dem beim Niederdrücken des Bedienelements (z.B. Display) ein mechanischer Schalter oder allgemein eine Kinematik impulsartig mechanisch auf das Bedienelement einwirkt, was für den Benutzer taktil vertrauter ist.

Bedienelemente mit großen Bedienoberflächen tendieren dazu, insbesondere bei exzentrischer manueller Betätigung zu verkippen, statt eine translatorische Niederdrückbewegung zu vollführen. Damit aber im Idealfall nur ein einziger mechanischer Schalter o.dgl. Kinematik für das passive haptische Feedback verwendet werden kann, sollte für eine Parallelhubbewegung des Bedienelements gesorgt werden, bei der die Niederdrückbewegung des Bedienelements unter Parallelbeibehaltung der Bedienoberfläche erfolgt. Ansätze dafür finden sich z.B. in DE-C-34 33 719, DE-A-36 43 927, DE-C-44 01 644, DE-C-196 01 492, DE-A-197 57 928, DE-A-10 2008 019 124, DE-A-10 2011 085 725, DE-B-10 2017 220 780, DE-A-10 2017 222 601, DE-A-10 2018 121 678, DE-A-10 2019 203 031, EP-A-0 304 847, EP-B-1 458 000, EP-B-2 449 448, US-A-5 813 521, US-A-2010/0172080, WO-A-2011/000910, WO-A-2014/198418 und WO-A-2016/183498.

Aus DE-A-2005 049 848 ist eine Bedieneinheit für ein Fahrzeug nach dem Oberbegriff des Anspruchs 1 bekannt.

Aufgabe der Erfindung ist es, eine konstruktiv einfache und auf das Minimum an einzuhaltenden engen Toleranzen gerichtete Parallelführungsvorrichtung für Bedienelemente von Bedieneinheiten für Fahrzeuge zu schaffen.

Zur Lösung dieser Aufgabe wird mit der Erfindung eine Bedieneinheit für ein Fahrzeug (d.h. für den Einbau in einem Fahrzeug) vorgeschlagen, die versehen ist mit
- einem eine Bedienoberfläche aufweisenden Bedienelement, das in einer Betätigungsrichtung durch Niederdrücken aus einer Ruheposition bis in eine Funktionsauslöseposition und zurück bewegbar geführt ist, und
- einer Parallelführungsvorrichtung zur Parallelführung des Bedienelements bei dessen Bewegung in Betätigungsrichtung und entgegengesetzt dazu,
- wobei die Parallelführungsvorrichtung versehen ist mit
- einem Trägerelement, das eine dem Bedienelement zugewandte Oberseite und eine dem Bedienelement abgewandte Unterseite aufweist,
- einer Hebelanordnung mit mindestens einem ersten Hebel und mit mindestens einem zweiten Hebel,
- einer Lagerungsanordnung mit mindestens einem ersten Lagerbock, an dem der erste Hebel um eine quer zur Betätigungsrichtung verlaufende Schwenkachse schwenkbar gelagert ist, und mit mindestens einem zweiten Lagerbock, an dem der zweite Hebel um eine quer zur Betätigungsrichtung verlaufende Schwenkachse schwenkbar gelagert ist,
- wobei die Schwenkachsen beider Hebel parallel zueinander verlaufen,
- zwei einander gegenüberliegenden Stützelementen für das Bedienelement, die von dem Bedienelement in Betätigungsrichtung abstehen und sich durch Durchgangsöffnungen im Trägerelement und/oder seitlich an dem Trägerelement vorbei bis über dessen Unterseite hinaus erstrecken,
- wobei sich die Hebelanordnung und die Lagerungsanordnung unterhalb des Trägerelements sowie zwischen den beiden Stützelementen befinden,
- wobei jeder Hebel einen sich von seiner Schwenkachse aus erstreckenden ersten Hebelarm und einen sich von seiner Schwenkachse aus entgegengesetzt zum ersten Hebelarm erstreckenden zweiten Hebelarm aufweist,
- wobei der erste Hebelarm des mindestens einen ersten Hebels gelenkig von einer mit einer Aussparungsöffnung versehenen Gelenkaussparung des einen Stützelements aufgenommen ist,
- wobei der erste Hebelarm des mindestens einen zweiten Hebels gelenkig von einer mit einer Aussparungsöffnung versehenen Gelenkaussparung des anderen Stützelements aufgenommen ist,
- wobei die zweiten Hebelarme des mindestens einen ersten Hebels und des mindestens einen zweiten Hebels in Verschwenkeingriff miteinander stehen.

Das erfindungsgemäße Konzept der Bedieneinheit umfasst für die Parallelführung des Bedienelements in Betätigungsrichtung, d. h. aus der Ruheposition bis in die Funktionsauslöseposition, und entgegengesetzt zur Betätigungsrichtung eine Parallelführungsvorrichtung, die unterhalb eines feststehenden Trägerelements eine Hebelanordnung aufweist. Die Hebelanordnung ist von der Konzeption her grundsätzlich im Stand der Technik bekannt, und zwar beispielsweise aus DE-C-44 016 44 und aus DE-B-10 2017 220 789 oder aber auch aus den zuvor genannten WO-Schriften.

Die Anordnung der Hebel unterhalb des Trägerelements bietet den Vorteil, oberhalb des Trägerelements Platz zu schaffen für verschiedene Bedienkonzepte wie z.B. Tasten (mechanisch, kapazitiv, optisch, induktiv arbeitend), Wippen, Drehsteller, Dreh-/Drücksteller, Displays, Touch-Displays, Touch-Pads mit "fester" Symbolik.

Erfindungsgemäß weisen die Gelenkaussparungen beider Stützelemente jeweils eine Geometrie auf, die bei einem durch Bewegen des Betätigungselements erfolgenden Verschwenken des mindestens einen ersten Hebels und des mindestens einen zweiten Hebels innerhalb der Gelenkaussparung eine Schiebebewegung des betreffenden ersten Hebelarms in Richtung zur Aussparungsöffnung und entgegengesetzt dazu erlaubt und eine Bewegung des betreffenden ersten Hebelarms innerhalb der Gelenkaussparung in Betätigungsrichtung des Betätigungselements und entgegengesetzt dazu verhindert (sogenannter "Schiebesitz").

Die Konzeption dieser erfindungsgemäß vorgesehenen Hebelanordnung ist besonders einfach und mit auf einfache Art und Weise realisierten Längenausgleichskompensationen versehen. Die gelenkige Verbindung der ersten und zweiten Hebel erfolgt durch mit Spiel versehenen Gelenken, innerhalb derer sich das in den feststehenden Gelenkteilen der Gelenke aufgenommene eine Ende des ersten Hebels und des zweiten Hebels quer zur Betätigungsrichtung verschieben lässt. Selbiges gilt für die Gelenkverbindung zwischen den beiden Hebeln. Durch das Vorsehen der Spiele ist eine besonders einfache Hebelanordnungskonstruktion möglich, die herstellungstechnisch einfach realisierbar ist, ohne übermäßig hohen Toleranzanforderungen genügen zu müssen.

Das Bedienelement, bei dem es sich vorzugsweise um ein Display und insbesondere um einen Touchscreen handelt, befindet sich oberhalb eines feststehenden Trägerelements, das bspw. in dem Gehäuse der Bedieneinheit angeordnet ist. Das Bedienelement ist mit zum Trägerelement weisenden gegenüberliegenden Stützelementen versehen, die über das Trägerelement hinausragen und sich entweder durch Durchgangsöffnungen im Trägerelement oder durch Randaussparungen des Trägerelements hindurch erstrecken. An der Unterseite des Trägerelements befinden sich zwei Lagerböcke, die jeweils einen der beiden Hebel schwenkbar lagern. Diese Schwenkgelenke sind im Wesentlichen spielfrei. Die beiden Hebel erstrecken sich innerhalb einer Ebene, die unterhalb des Trägerelements angeordnet ist und im Wesentlichen parallel zum Trägerelement verläuft (sofern die Hebel nicht verschwenkt sind). Die beiden Hebel greifen an ihren einander zugewandten Enden mit Spiel ineinander und sind an ihren einander abgewandten Enden in Gelenkaussparungen aufgenommen, die in jedem der Stützelemente ausgebildet sind. Jeder Hebel weist zwei Hebelarme auf, und zwar beidseitig des betreffenden Schwenkgelenks des betreffenden Lagerbocks einen Hebelarm. Die jeweils ersten Hebelarme sind von den Gelenkaussparungen an den Stützelementen aufgenommen, während die jeweiligen zweiten Hebelarme der beiden Hebel ineinandergreifen. Dies kann bspw. durch eine Verzahnung (vorzugsweise Evolventenverzahnung) oder auch durch eine Gelenkausbildung erfolgen, die ähnlich derjenigen ist, über die die ersten Hebelarme der beiden Hebel in den betreffenden Stützelementen aufgenommen sind.

Die ersten Hebelarme der beiden Hebel verschieben sich in den Gelenkaussparungen der betreffenden Stützteile geringfügig, wenn das Bedienelement niedergedrückt wird bzw. aus der Funktionsauslöseposition wieder in die Ruheposition gelangt. Insoweit erlauben also die Gelenkaussparungen der Stützelemente eine Schiebebewegung des betreffenden ersten Hebelarms in Richtung zur Aussparungsöffnung des betreffenden Stützelements, an die sich die Gelenkaussparung anschließt und entgegengesetzt dazu (Schiebesitz).

Das Bedienelement der erfindungsgemäßen Bedienvorrichtung ist ferner an dem Trägerelement in einer sich quer zur Betätigungsrichtung erstreckenden Ebene gegen ungewollte Verschiebungen z.B. durch eine Nut-Feder-Führung oder durch eine Zapfen-Lochaufnahme-Führung gesichert geführt.

Die Funktionsauslösung kann bei der erfindungsgemäßen Bedieneinheit entweder durch eine Berührungssensorik in einem Touchscreen, der das Bedienelement bildet, oder aber durch einen Schalter erfolgen, der in der Funktionsauslöseposition des Bedienelements betätigt ist. Auch eine Kombination beider Mechanismen ist möglich.

In vorteilhafter Ausgestaltung der Erfindung kann vorgesehen sein, dass jeder erste Hebelarm ein von einer der Gelenkaussparungen aufgenommenes Gelenkende aufweist und dass jede Gelenkaussparung einen sich an die Aussparungsöffnung anschließenden Aufnahmeraum aufweist, der das Gelenkende des betreffenden ersten Hebelarms zur Verhinderung von Bewegungen des Gelenkendes des ersten Hebelarms innerhalb des Aufnahmeraums in Betätigungsrichtung des Bedienelements und entgegengesetzt dazu umgreift und das Gelenkende des betreffenden ersten Hebelarms für die Zulassung von Schiebebewegungen des Gelenkendes des ersten Hebelarms innerhalb des Aufnahmeraums nach Art einer Kulisse führt.

Hierbei kann mit Vorteil vorgesehen sein, dass jede Gelenkaussparung im Wesentlichen U-förmig ausgebildet ist. In Seitenansicht auf die beiden Hebel der Hebelanordnung betrachtet ist jede Gelenkaussparung an den Stützelementen nach Art eines liegenden "U" ausgebildet, wobei die Öffnung des "U" die Aussparungsöffnung ist und die Gelenkaussparung sich an diese Aussparungsöffnung anschließt. Die Tiefe der Gelenkaussparung ist derart gewählt, dass das Gelenkende des betreffenden ersten Hebelarms eines der beiden Hebel, das von der Gelenkaussparung aufgenommen ist, bei Ausrichtung des Hebels im Wesentlichen parallel zum Trägerelement noch Spiel zum Grund der Gelenkaussparung aufweist und dass das Gelenkende des betreffenden ersten Hebelarms bei maximaler Schwenkposition des Hebelarms weiterhin noch von der Gelenkaussparung aufgenommen ist.

Zweckmäßigerweise ist jeder Hebel mit seinem betreffenden ersten Hebelarm über zwei oder drei das jeweilige Gelenkende bildenden Vorsprüngen gelenkig am betreffenden Stützelement oder an jeweils zwei bzw. drei Stützteilen (Stützstäben) des Stützelements aufgenommen. Dies sorgt für eine Torsionssteifigkeit der Gesamtanordnung, bei der die Parallelführung der Bedienoberfläche des Bedienelements beim Niederdrücken desselben auch dann gewährleistet ist, wenn bspw. das Bedienelement in einem Eckenbereich oder in einem Randbereich niedergedrückt wird und reduziert die Anfälligkeit der Parallelführung oder der Hebelanordnung sowie deren Gelenkverbindung mit den Stützelementen gegen Materialverzug, was vor allem bei Kunststoffspitzgussteilen und insbesondere bei solchen, die großformatig ausgelegt sind, problematisch sein kann.

In weiterer vorteilhafter Ausgestaltung der Erfindung sollte das Bedienelement eine im Wesentlichen vier- bzw. rechteckige Kontur mit zwei Längsrändern und zwei Querrändern aufweisen. Hierbei ist mit weiterem Vorteil vorgesehen, dass die Stützelemente entlang der beiden Querränder oder entlang der beiden Längsränder des Bedienelements von diesem in Betätigungsrichtung weisend abstehen.

Bei einer weiteren konstruktiv zweckmäßigen Ausgestaltung der Erfindung weist jedes Stützelement zwei zueinander beabstandete Stützstäbe auf, die in den jeweils von einem Längs- und einem Querrand gebildeten Eckenbereichen des Bedienelements von diesem in Betätigungsrichtung weisend abstehen, wobei jeder Stützstab eine Gelenkaussparung aufweist.

Bei dieser zuvor beschriebenen Ausgestaltung der Erfindung ist es zweckmäßig, wenn jedes Gelenkende der ersten Hebelarme des mindestens einen ersten Hebels und des mindestens einen zweiten Hebels zwei Gelenkendevorsprünge aufweist, die in die Gelenkaussparungen der Stützstäbe der betreffenden Stützelemente eingetaucht sind (Schiebesitz).

Wie oben bereits im Zusammenhang mit der Verhinderung/Reduzierung der Anfälligkeit gegen Materialverzug hinsichtlich der Gelenkverbindung der ersten Hebelarme mit den Stützelementen beschrieben, sind die zweiten Hebelarme des mindestens einen ersten Hebels und des mindestens einen zweiten Hebels gelenkig miteinander verbunden. Der zweite Hebelarm des einen Hebels weist einen Gelenkvorsprung auf, der in eine Gelenkaussparung des zweiten Hebelarms des anderen Hebels eingetaucht ist, und zwar mit "Schiebesitz".

Wie bereits oben angedeutet, ist es ferner von Vorteil, wenn die zweiten Hebelarme des mindestens einen ersten Hebels und des mindestens einen zweiten Hebels jeweils ein Gelenkende aufweisen, wobei eines dieser beiden Gelenkenden eine Gelenkaussparung aufweist, in die das andere Gelenkende unter Verhinderung einer Bewegung in Betätigungsrichtung sowie entgegengesetzt dazu innerhalb der Gelenkaussparung und unter Ermöglichung einer zur Betätigungsrichtung orthogonalen Schiebebewegung eingetaucht ist.

Zweckmäßig kann es sein, wenn die zweiten Hebelarme des mindestens einen ersten Hebels und des mindestens einen zweiten Hebels jeweils ein Gelenkende aufweisen, wobei diese beiden Gelenkenden miteinander verzahnt sind.

In Zusammenhang mit der Hebelanordnung wurde bereits oben angemerkt, dass diese mindestens ein Hebelpaar aus einem ersten und einem zweiten Hebel aufweist, die beide schwenkbar an Lagerböcken angelagert und ihren einander zugwandten Enden miteinander gelenkig gekoppelt sind. Diese beiden Hebel können nach Art zweier plattenartiger Konstruktionen torsionssteif ausgebildet sein, was insbesondere materialabhängig erfolgen sollte. Als geeignetes Material für die Hebelanordnung (aber auch für die Stützelemente und die Lagerböcke) bietet sich als gegenüber z.B. Metall wesentlich leichter und einfacher zu verarbeitendes Material Kunststoff an. Zur Materialeinsparung sollte man die plattenartigen Hebel konstruktiv aussteifen, was durch Versteifungsrippen odgl. realisierbar ist und dem Fachmann geläufig sein sollte, wenn es darum geht, aus Kunststoff bestehende Bauteile konstruktiv zu versteifen.

Wie bereits oben angedeutet, kann die Bedienoberfläche des Bedienelements ein Display mit Berührungssensorik zur Erkennung einer Berührung des Displays durch ein Betätigungsobjekt wie z.B. den Finger einer Hand aufweisen.

An dem Bedienelement können im Bedarfsfall zusätzlich zu dem Display mindestens eine Wipptaste und/oder mindestens eine Drücktaste und/oder mindestens ein Drehknopf und/oder mindestens ein Dreh-/Drücksteller angeordnet sein.

Zur weiteren Verbesserung der Transversalführung ist es von Vorteil, wenn das Bedienelement in einer sich quer zur Betätigungsrichtung erstreckenden Ebene gegen ungewollte Verschiebungen z.B. durch eine Zapfen-Lochaufnahme-Führung gesichert geführt ist, was z.B. an drei Stellen, die nicht auf einer gemeinsamen Gerade liegen, zwischen Trägerelement und Bedienelement erfolgen kann, und zwar vorteilhafterweise durch axiale Zapfen/Lochaufnahme-Schiebeführungen.

Die Bedieneinheit kann ferner ein Gehäuse mit einer Vorderseite mit einer Aussparung aufweisen, in der das Bedienelement angeordnet ist, wobei das Trägerelement in und/oder an dem Gehäuse befestigt ist.

Bedieneinheiten für Fahrzeuge, bei denen die Bedienoberfläche des Bedienelements mehrere Symbolfelder aufweist, die bei Berührung und anschließendem Niederdrücken des Bedienelements unterschiedliche Bedienfunktionen auslösen, sind zweckmäßiger mit einem haptischen Feedback versehen. Derartige Konzepte haben sich in den letzten Jahren gegenüber der Rückmeldung einer validen Funktionsauslösung mittels optischer und akustischer Signale durchgesetzt. Beim haptischen Feedback unterscheidet man unter aktiven und passiven Systemen. Bei aktiven Systemen wird das Bedienelement mittels eines Aktuators pulsartig mechanisch angeregt, was der Bediener taktil spürt. Derartige aktive haptische Feedback-Systeme sind vergleichsweise aufwendig in ihrer Konstruktion. Einfacher dagegen sind sogenannte passive haptische Feedback-Systeme, bei denen ein Schalter verwendet wird, der eine insoweit charakteristische Betätigungskraft-Weg-Charakteristik aufweist, als das Schalterbetätigungsorgan des Schalters bei Vergrößerung der Betätigungskraft zunächst allmählich bewegt wird, bis zu einem Punkt, an dem es ohne weitere Betätigungskrafterhöhung selbsttätig in die Funktionsauslöseposition "einschnappt", wozu typischerweise eine gewölbte Federstahlscheibe genutzt wird. Schalter mit derartigen Charakteristiken liefern ein haptisches Feedback und entsprechen dem von konventionellen Tasten her bekannten, gewohnten Verhalten. Wird nun bei der erfindungsgemäßen Bedieneinheit ein solcher Schalter verwendet, so kann ein einziger derartiger Schalter eingesetzt werden, um der erfindungsgemäßen Bedieneinheit ein haptisches Feedback zu verleihen.

Gemäß einer insoweit vorteilhaften Ausgestaltung der Erfindung weist die Bedieneinheit also einen mechanischen Schalter mit einem Schaltergehäuse und einem Schalterbetätigungsorgan auf,
- wobei das Schaltergehäuse auf der Oberseite oder an der Unterseite des Trägerelements angeordnet und sein Schalterbetätigungsorgan von dem Bedienelement bei dessen Bewegung aus der Ruheposition in die Funktionsauslöseposition betätigbar ist oder
- wobei das Schaltergehäuse an der Unterseite des Trägerelements angeordnet und sein Schalterbetätigungsorgan durch einen der beiden miteinander in Verschwenkeingriff stehenden zweiten Hebelarme betätigbar ist, oder
- wobei das Schaltergehäuse an einem der beiden in Verschwenkeingriff miteinander stehenden zweiten Hebelarme angeordnet und sein Schalterbetätigungsorgan bei Bewegung des Betätigungselements aus der Ruheposition in die Funktionsauslöseposition durch das Trägerelement betätigbar ist, oder
- wobei der Schalter unterhalb eines der Stützelemente angeordnet und sein Schalterbetätigungsorgan bei Bewegung des Bedienelements aus der Ruheposition in die Funktionsauslöseposition entweder von dem betreffenden Stützelement oder einer in Verlängerung des betreffenden Stützelements Gegenfläche betätigbar ist.

Der Schalter ist zwischen dem Trägerelement und dem Bedienelement angeordnet und damit zwischen einem feststehenden Element und einem beweglichen. Im Hinblick auf Toleranzen ist dieses Konzept demjenigen vorzuziehen, bei dem der Schalter zwischen den Hebeln und dem Bedienelement angeordnet und damit zwischen beiden von zwei Seiten aus "eingepresst" wird.

Anders als oben ausgedrückt weist der Schalter eine Kinematikeinheit auf mit einem bei Bewegung des Bedienelements aus der Ruheposition in die Funktionsauslöseposition mechanisch direkt oder indirekt bewegbaren Impulsanregungsorgan zur infolge einer mechanischen Bewegung erfolgenden Erzeugung mechanischer Energie und zur impulsartigen Freigabe dieser Energie unter direkter oder indirekter mechanischer Einwirkung auf das Bedienelement, wenn dieses seine Funktionsauslöseposition erreicht.

Das Schaltergehäuse kann als der Dom (auch Key Top genannt) einer Schaltmatte realisiert sein, in den eine Schnappscheibe aus z.B. Federstahl integriert ist. Die Funktion des Schalterbetätigungsorgans übernimmt dann ebenfalls der Dom mit einem nach innen abstehenden Stößel, dessen Stirnfläche mit elektrisch leitendem Material beschichtet ist und im niedergedrückten Zustand zwei Kontaktfelder auf einer Platine kurzschließt.

Wie bereits oben beschrieben, kann das Bedienelement ein Display mit oder ohne Hinterleuchtung und mit einer veränderbare Information in Form z. B. von Symbolen, Icons, alphanumerischen Zeichen oder Graphiken anzeigende Anzeigefläche als Bedienoberfläche aufweisen oder das Bedienelement kann eine unveränderbare Information, insbesondere hinterleuchtete unveränderbare Information in Form z. B. von Symbolen, Icons, alphanumerischen Zeichen oder Graphiken anzeigende Anzeigefläche als Bedienoberfläche aufweisen.

Ein Wesensmerkmal der Erfindung ist es, die in den verschiedenen Gelenkverbindungen mit möglichst geringen Toleranzen auszuführenden, sich berührenden und aneinander gleitenden Flächen so klein wie möglich zu gestalten, damit ein möglicher Materialverzug der typischerweise aus Kunststoff gefertigten Teile so gering wie möglich ausfällt bzw. auf einfache Art und Weise kompensiert werden kann.

Ein Ausführungsbeispiel der Erfindung wird nachfolgend anhand der Zeichnung näher beschrieben. Im Einzelnen zeigen dabei:
- Fig. 1: Eine schematische Schnittansicht durch eine Bedieneinheit, wobei sich das Bedienelement in seiner Ruheposition befindet,
- Fig. 2: als schematische Schnittansicht die Bedieneinheit mit im niedergedrückten Zustand und damit in der Funktionsauslöseposition befindlichem Bedienelement, und
- Fig. 3: eine Draufsicht auf die Bedieneinheit im Horizontalschnitt entlang der Linie III-III der Fig. 1.

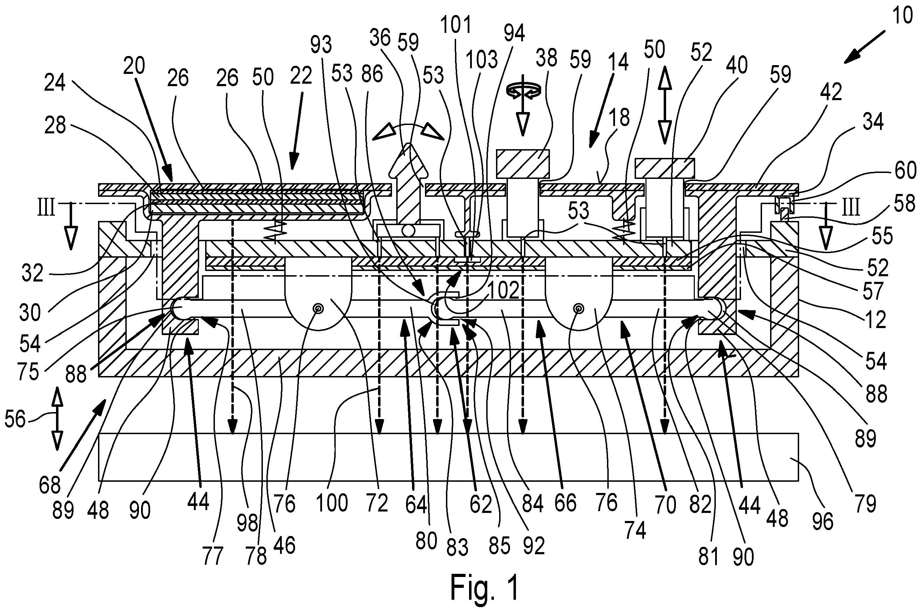

In Fig. 1 ist im Schnitt und perspektivisch schematisch der Aufbau eines Ausführungsbeispiels einer Bedieneinheit 10 nach der Erfindung gezeigt. Die Bedieneinheit 10 weist ein Gehäuse 12 auf, an dessen Vorderseite 14 sich die Bedienoberfläche 18 eines niederdrückbaren Bedienelements 20 befindet. Das Bedienelement 20 weist in einem Teil der Bedienoberfläche 18 ein Display 22 mit einer Berührungssensorik 24 auf. Die Bedienoberfläche 18 weist einzelne Bedienfelder 26 auf. Unterhalb der Berührungssensorik 24 befindet sich die eigentliche Anzeigeeinheit 28 des Display 22, hinter der sich eine Hinterleuchtungseinheit 30 mit beispielsweise einem Diffusor 32 befindet. Das Display 22 befindet sich auf einem Bedienelementträger 34, auf dem sich weitere mechanische Bedienelemente 20 befinden können. Zu diesen weiteren mechanischen Bedienelementen 20 gehören beispielsweise eine Anzahl von nebeneinander angeordneten Wipp- bzw. Kipptasten 36, ein Dreh-/Drücksteller 38 und ein oder mehrere Drucktasten 40. Die Bedienoberfläche 18 wird von einer sogenannten Abdeckplatte 42 gebildet, die beispielsweise aus Glas oder Kunststoff bestehen kann. Im Bereich der weiteren mechanischen Bedienelemente 20 weist die Abdeckplatte 42 entsprechende Aussparungen auf. Zusätzlich kann das Bedienelement 20 auch kapazitiv wirkende Taster oder gegebenenfalls statt des Displays ein Touch-Pad mit "fester" Symbolik aufweisen.

Das Bedienelement 20 ist mit Stützelementen 44 versehen, die nach Art von zum Boden 46 des Gehäuses 12 weisenden Stützstäben 48 ausgebildet sind. Typischerweise befinden sich an der Unterseite des Bedienelementträgers 34 vier derartige Stützstäbe 48.

Das Bedienelement 20 kann, wie bei 50 angedeutet federnd gelagert sein, und zwar an einem Trägerelement 52, dass das Gehäuse 12 durchzieht oder überspannt und im Wesentlichen parallel zum Boden 46 des Gehäuses 12 verläuft. Die Trägerplatte weist Durchgangsöffnungen 54 auf, durch die sich hindurch die Stützstäbe 48 bis unterhalb des Trägerelements 52 erstrecken. Der Bedienelementträger 34 ist an dem Trägerelement 52 axial geführt und gegen Verschiebungen in einer zur Betätigungsrichtung des Bedienelements orthogonalen Ebene gesichert. Hierzu sind drei Nut-Feder- oder Zapfen-Lochaufnahme-Führungen vorgesehen, von denen zwei gezeigt sind und jeweils einen Führungszapfen 58 an dem Bedienelementträger 34 aufweisen, der in eine Führungsaussparung 60 in dem Trägerelement 52 eingetaucht ist. Die aufeinander gleitenden Flächen sind möglichst klein dimensioniert, um die Axialführungen gegen Materialverzug unempfindlich zu gestalten. Dem Trägerelement 52 kommt also die Funktion eines feststehenden Translationsführungselements zu, an dem das bewegbare Gegenführungselement, in diesem Fall die Stützstäbe 48, axial und spielfrei geführt ist.

Die oben genannten weiteren Bedienelemente (Wipp- bzw. Kipptasten 36, Dreh-/Drücksteller 38 und Drucktasten 40) sind auf der Oberseite des Trägerelements 52 angeordnet und ragen durch Öffnungen 59 in der Abdeckplatte 42 über diese hinaus nach oben. Die von diesen weiteren Bedienelementen betätigten Schaltkontakte befinden sich auf einer Platine 57, die unter Zwischenschaltung einer Schaltmatte 55 an der Unterseite des Trägerelements 52 angeordnet ist. Die mechanische Übertragung der Betätigung der Bedienelemente zur Bewirkung des Schließens eines Schaltkontakts erfolgt durch Stößel 53, die das Trägerelement 52 durchziehen und axial verschiebbar gelagert sind sowie auf Schaltdomen der Schaltmatte 55 aufliegen, was im Einzelnen aber nicht gezeigt ist.

Unterhalb des Trägerelements 52 befindet sich eine Hebelanordnung 62, die zwei Hebel 64, 66 aufweist. Diese beiden Hebel 64, 66 sind in diesem Ausführungsbeispiel plattenförmig ausgebildet und torsionssteif. Zusammen mit dem Trägerelement 52 bilden sie eine Parallelführungsvorrichtung 68, die es ermöglicht, dass sich die Bedienoberfläche 18 parallel verschiebt, wenn manuell auf eines der Bedienfelder 26 Druck ausgeübt wird. Zu dieser Parallelführungsvorrichtung 68 gehört ferner noch eine Lagerungsanordnung 70, die einen ersten Lagerbock 72 zur schwenkbaren Lagerung des ersten Hebels 64 und einen zweiten Lagerbock 74 zur schwenkbaren Lagerung des zweiten Hebels 66 aufweist. Die beiden Schwenkachsen sind bei 76 gezeigt.

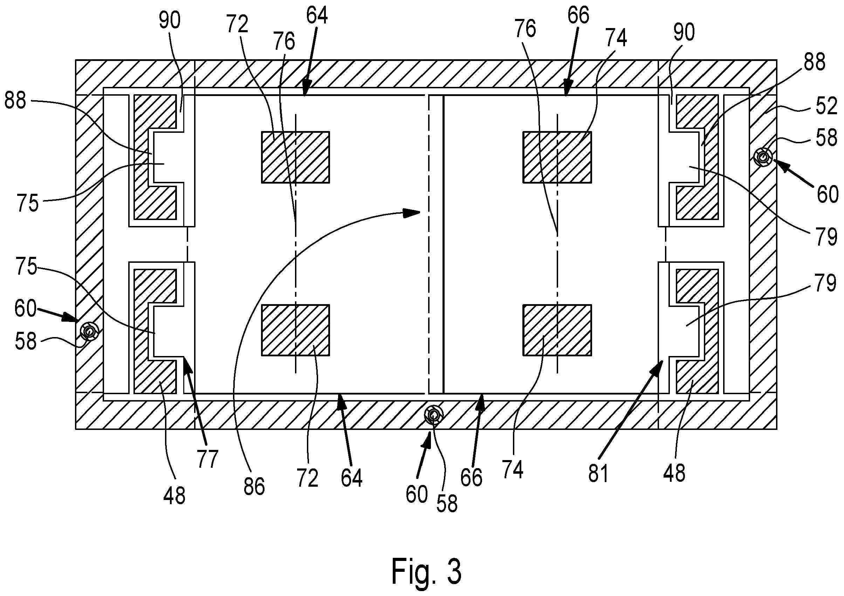

Durch die schwenkbare Lagerung der beiden Hebel 64, 66 entstehen beidseitig des ersten Hebels 64 ein erster Hebelarm 78 sowie ein zweiter Hebelarm 80. Bezüglich des zweiten Hebels 66 entsteht ein erster Hebelarm 82 sowie ein zweiter Hebelarm 84. Die zweiten Hebelarme 80, 84 der beiden Hebel 64, 66 sind mittels einer Gelenkverbindung 86 miteinander gekoppelt, während, ein Gelenkende 77 des ersten Hebelarms 78 des ersten Hebels 64 gelenkig mit den beiden Stützstäben 48 gekoppelt ist und ein Gelenkende 81 des ersten Hebelarms 82 des zweiten Hebels 66 mit den beiden anderen Stützstäben 48 gelenkig gekoppelt ist. Die Gelenkenden 77 und 81 sind wie z.B. in Fig. 3 zu erkennen ist, als Vorsprünge 75 bzw. 79 ausgebildet.

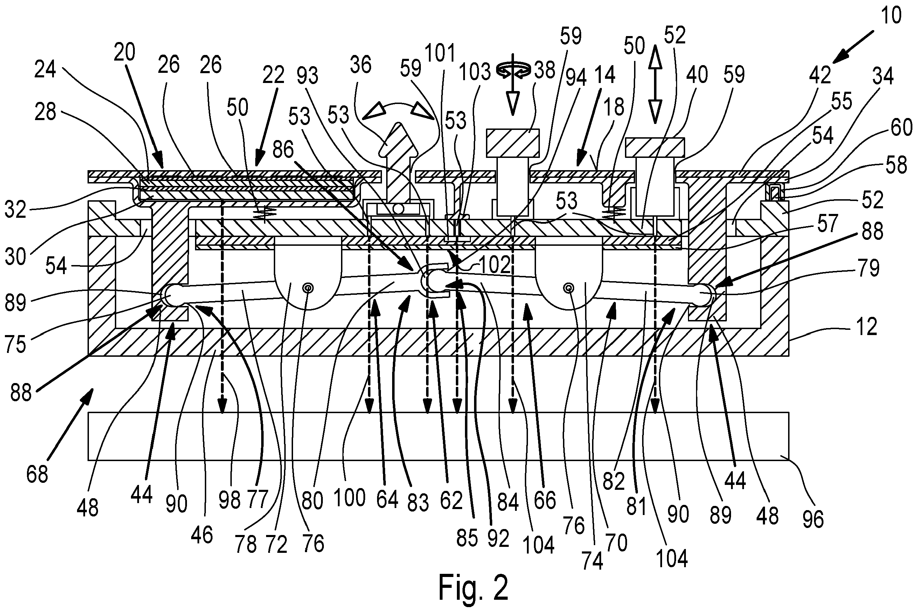

Wie anhand von Fig. 2 zu erkennen ist, sind die gelenkigen Verbindungen der Hebel untereinander sowie mit den Stützstäben 48 mittels in einer Dimension spielbehafteten Gelenken versehen. So weist jeder Stützstab 48 eine Gelenkaussparung 88 mit einem Aufnahmeraum 89 auf, der über eine Aussparungsöffnung 90 des betreffenden Stützstabes 48 zugänglich ist. Genauso weist die Gelenkverbindung 86 eine Gelenkaussparung 92 an dem Gelenkende 85 des zweiten Hebelarms 80 des einen Hebels (in diesem Ausführungsbeispiel des ersten Hebels 64) auf, die ebenfalls einen Aufnahmeraum 93 aufweist und mit einer Aussparungsöffnung 94 versehen ist durch die hindurch ein Gelenkende 83 des zweiten Hebelarms 84 des anderen Hebels (in diesem Beispiel des Hebels 66) eingetaucht ist. Die Anordnung dieser Gelenke ist nun dergestalt, dass sie eine Schiebebewegung der jeweils gelenkig aufgenommenen Gelenkenden 77, 81, 83 der jeweiligen Hebel bzw. Hebelarme zulässt, und zwar in einer Richtung, die orthogonal zur Betätigungsrichtung 56 ist, nämlich zur jeweiligen Aussparungsöffnung 94 hin und von dieser weg.

Der Hintergrund dieser Vorgehensweise und Konstruktion wird bei Betrachtung der Fig. 2 deutlich, die schematisch zeigt, wie sich die Parallelführungsvorrichtung 68 verhält, wenn Druck auf die Bedienoberfläche 18 des Bedienelements 20 ausgeübt wird. Dann nämlich verschwenken die ersten und zweiten Hebel 64, 66, womit sich ihre an den Stützstäben 48 jeweils gelenkig gelagerten Gelenkenden 77, 81 innerhalb der betreffenden Gelenkaussparungen 88 zur jeweiligen Aussparungsöffnung hin bewegen (Schiebesitz). Selbiges geschieht auch bei der Gelenkverbindung 86.

Die erfindungsgemäße Bedieneinheit 10 weist ferner eine Auswerte- und Ansteuereinheit 96 auf, die Signale 98 von der Berührungssensorik 24 des Display 22, Signale 100 von einem mechanischen Schalter 102 sowie Signale 104 von den verschiedenen anderen Bedienelementen 20 erhält. Die Auswerte- und Ansteuereinheit 96 steuert nun in Abhängigkeit von den empfangenen Signalen verschiedene Bedienfunktionen bzw. löst diese aus, wie es an sich bei Multifunktions-Bedieneinheiten für Fahrzeuge bekannt ist. Der mechanische Schalter 102, der z.B. ein Schaltergehäuse 101 und ein Schalterbetätigungsorgan 103 aufweist, dient der Meldung an die Auswerte- und Ansteuereinheit 96, dass die valide manuelle Betätigung eines der Bedienfelder 26 erkannt worden ist. Der mechanische Schalter 102 dient ferner dem haptischen Feedback für den Benutzer, dass in diesem Ausführungsbeispiel passiv erfolgt. Die Mechanik des Schalter 102 lässt sich taktil spüren, wenn der Finger einer Hand auf einem der Bedienfelder 26 aufliegt und das Bedienelement 20 niedergedrückt wird.

Wie oben beschrieben, kann der Schalter 102 integraler Bestandteil einer Schaltmatte sein, also mit einem Schaltdom versehen sein, der beim Niederdrücken eine Federscheibe betätigt oder wobei bei Schalterbetätigung eine Federscheibe gedrückt wird, die schlagartig "umspringt" und aus diesem Zustand erst dann wieder in ihren nicht gespannten Zustand übergeht, wenn die Kraft, mit der gegen das Bedienelement beim Niederdrücken gedrückt wird, aufgehoben ist, das Bedienelement also insoweit "losgelassen" worden ist. In dieser Weise wirkt also der Schalter auch zum Zurückbewegen des Bedienelements aus der niedergedrückten Position in seine Ruheposition.

Dies kann alternativ zu den bei 50 gezeigten Federn durch Gewichte unterstützt werden, die Teil der Hebel 64, 66 der Hebelanordnung 62 sind. Anhand von Fig. 2 ist zu erkennen, dass die beiden Hebel 64, 66 zwischen ihren jeweiligen Schwenkachsen 76 sich nach oben bewegen, wenn das Bedienelement nach unten bewegt wird. Wenn man nun an zumindest einem dieser Hebel (bspw. am zweiten Hebelarm 84 des zweiten Hebels 66) ein Gewicht anbringt bzw. in den Hebel integriert, so würde dieses Gewicht den zweiten Hebelarm 84 des zweiten Hebels 66 nach unten ziehen, wenn die Niederdrückkraft auf das Bedienelement aufgehoben ist, dieses also sozusagen losgelassen worden ist. Bei dieser Alternative ist also die federnde Lagerung, wie bei 50 angedeutet, nicht zwingen erforderlich.

Die einzigen herstellungstechnisch vergleichsweise engen Toleranzen, die bei der Konstruktion der Parallelführungsvorrichtung 68 zu beachten sind, sind die Nut-/Feder-Führungen der Stützstäbe 48 an dem Trägerelement 52 bzw. an den Rändern der Durchgangsöffnungen 54 des Trägerelements 52 und die Gelenkverbindungen der beiden Hebel 64, 66 untereinander sowie mit den Stützstäben 48, und zwar lediglich in der Dimension in Betätigungsrichtung 56. Bezüglich dieser Dimension sollten die gelenkig verbundenen Enden der Hebel 64, 66 spielfrei bzw. mit minimalem Spiel sein.

### BEZUGSZEICHENLISTE

- 10: Bedieneinheit
- 12: Gehäuse
- 14: Vorderseite
- 18: Bedienoberfläche des Bedienelements
- 20: Bedienelement
- 22: Display
- 24: Berührungssensorik des Bedienelements
- 26: Bedienfelder auf der Bedienoberfläche
- 28: Anzeigeeinheit des Displays
- 30: Hinterleuchtungseinheit des Displays
- 32: Diffusor des Displays
- 34: Bedienelementträger
- 36: Kipptasten des Bedienelements
- 38: Dreh-/Drücksteller des Bedienelements
- 40: Drucktasten des Bedienelements
- 42: Abdeckplatte des Bedienelements
- 44: Stützelemente am Bedienelement
- 46: Boden des Gehäuses
- 48: Stützstäbe der Stützelemente
- 50: elastische Lagerung des Bedienelements
- 52: Trägerelement
- 53: Stößel
- 54: Durchgangsöffnungen im Trägerelement
- 55: Schaltmatte
- 56: Betätigungsrichtung des Bedienelements
- 57: Platine
- 58: Führungszapfen
- 59: Öffnungen in der Abdeckplatte
- 60: Führungsaussparung
- 62: Hebelanordnung der Parallelführungsvorrichtung
- 64: erster Hebel der Hebelarmvorrichtung
- 66: zweiter Hebel der Hebelarmvorrichtung
- 68: Parallelführungsvorrichtung
- 70: Lagerungsanordnung für die Hebel
- 72: erster Lagerbock
- 74: zweiter Lagerbock
- 75: Gelenkendevorsprung
- 76: Schwenkachsen der beiden Hebel
- 77: Gelenkende des ersten Hebelarms des ersten Hebels
- 78: erster Hebelarm des ersten Hebels
- 79: Gelenkendevorsprung
- 80: zweiter Hebelarm des ersten Hebels
- 81: Gelenkende des ersten Hebelarms des zweiten Hebels
- 82: erster Hebelarm des zweiten Hebels
- 83: Gelenkende des zweiten Hebelarms des ersten Hebels
- 84: zweiter Hebelarm des zweiten Hebels
- 85: Gelenkende des zweiten Hebelarms des zweiten Hebels
- 86: Gelenkverbindung
- 88: Gelenkaussparung an einem Stützstab
- 89: Aufnahmeraum der Gelenkaussparung
- 90: Aussparungsöffnungen der Gelenkaussparung
- 92: Gelenkaussparung
- 93: Aufnahmeraum der Gelenkaussparung
- 94: Aussparungsöffnung der Gelenkaussparung
- 96: Ansteuereinheit
- 98: Signale
- 100: Signale
- 101: Schaltergehäuse des Schalters
- 102: Schalter
- 103: Schalterbetätigungsorgan
- 104: Signale

### LITERATURVERZEICHNIS

DE-C-34 33 719
DE-A-36 43 927
DE-C-44 01 644
DE-C-196 01 492
DE-A-197 57 928
DE-A-10 2008 019 124
DE-A-10 2011 085 725
DE-B-10 2017 220 780
DE-A-10 2017 222 601
DE-A-10 2018 121 678
DE-A-10 2019 203 031
EP-A-0 304 847
EP-B-1 458 000
EP-B-2 449 448
US-A-5 813 521
US-A-2010/0172080
WO-A-2011/000910
WO-A-2014/198418
WO-A-2016/183498

## Patentansprüche

1. Bedieneinheit für ein Fahrzeug, mit
- einem eine Bedienoberfläche (18) aufweisenden Bedienelement (20), das in einer Betätigungsrichtung (56) durch Niederdrücken aus einer Ruheposition bis in eine Funktionsauslöseposition und zurück bewegbar geführt ist, und
- einer Parallelführungsvorrichtung (68) zur Parallelführung des Bedienelements (20) bei dessen Bewegung in Betätigungsrichtung (56) und entgegengesetzt dazu,
- wobei die Parallelführungsvorrichtung (68) versehen ist mit
- einem Trägerelement (52), das eine dem Bedienelement (20) zugewandte Oberseite und eine dem Bedienelement (20) abgewandte Unterseite aufweist,
- einer Hebelanordnung (62) mit mindestens einem ersten Hebel (64) und mit mindestens einem zweiten Hebel (66),
- einer Lagerungsanordnung (70) mit mindestens einem ersten Lagerbock (72), an dem der erste Hebel (64) um eine quer zur Betätigungsrichtung (56) verlaufende Schwenkachse (76) schwenkbar gelagert ist, und mit mindestens einem zweiten Lagerbock (74), an dem der zweite Hebel (66) um eine quer zur Betätigungsrichtung (56) verlaufende Schwenkachse (76) schwenkbar gelagert ist,
- wobei die Schwenkachsen (76) beider Hebel (64,66) parallel zueinander verlaufen, und
- zwei einander gegenüberliegenden Stützelementen (44) für das Bedienelement (20), die von dem Bedienelement (20) in Betätigungsrichtung (56) abstehen,
- wobei sich die Hebelanordnung (62) und die Lagerungsanordnung (70) unterhalb des Trägerelements (52) sowie zwischen den beiden Stützelementen (44) befinden,
- wobei jeder Hebel (64,66) einen sich von seiner Schwenkachse (76) aus erstreckenden ersten Hebelarm (78,82) und einen sich von seiner Schwenkachse (76) aus entgegengesetzt zum ersten Hebelarm (78,82) erstreckenden zweiten Hebelarm (80,84) aufweist und
- wobei der erste Hebelarm (78) des mindestens einen ersten Hebels (64) gelenkig von einer mit einer Aussparungsöffnung (90) versehenen Gelenkaussparung (88) des einen Stützelements (44) aufgenommen ist,
**dadurch gekennzeichnet, dass**
- der erste Hebelarm (82) des mindestens einen zweiten Hebels (66) gelenkig von einer mit einer Aussparungsöffnung (90) versehenen Gelenkaussparung (92) des anderen Stützelements (44) aufgenommen ist,
- die zweiten Hebelarme (80,84) des mindestens einen ersten Hebels (64) und des mindestens einen zweiten Hebels (66) in Verschwenkeingriff miteinander stehen,
- sich die zwei Stützelemente (44) durch Durchgangsöffnungen (54) im Trägerelement (52) und/oder seitlich an dem Trägerelement (52) vorbei bis über dessen Unterseite hinaus erstrecken,
- die Gelenkaussparungen (92) beider Stützelemente (44) jeweils eine Geometrie aufweisen, die bei einem durch Bewegen des Betätigungselements erfolgenden Verschwenken des mindestens einen ersten Hebels (64) und des mindestens einen zweiten Hebels (66) innerhalb der Gelenkaussparung (88) eine Schiebebewegung des betreffenden ersten Hebelarms (78, 82) in Richtung zur Aussparungsöffnung (90) und entgegengesetzt dazu erlaubt und eine Bewegung des betreffenden ersten Hebelarms (78,82) innerhalb der Gelenkaussparung (88) in Betätigungsrichtung (56) des Betätigungselements und entgegengesetzt dazu verhindert, und
- das Bedienelement (20) an dem Trägerelement (52) in einer sich quer zur Betätigungsrichtung (56) erstreckenden Ebene gegen ungewollte Verschiebungen z.B. durch eine Nut-Feder- oder Zapfen-Lochaufnahme-Führung (61) gesichert geführt ist.

2. Bedieneinheit nach Anspruch 1, **dadurch gekennzeichnet, dass** jeder erste Hebelarm (78,82) ein von einer der Gelenkaussparungen (88) aufgenommenes Gelenkende (77,81) aufweist und dass jede Gelenkaussparung (88) einen sich an die Aussparungsöffnung (90) anschließenden Aufnahmeraum (89,93) aufweist, der das Gelenkende (77,81) des betreffenden ersten Hebelarms (78,82) zur Verhinderung von Bewegungen des Gelenkendes (77,81) des ersten Hebelarms (78,82) innerhalb des Aufnahmeraums (89,93) in Betätigungsrichtung (56) des Bedienelements (20) und entgegengesetzt dazu umgreift und das Gelenkende (77,81) des betreffenden ersten Hebelarms (78,82) für die Zulassung von Schiebebewegungen des Gelenkendes (77,81) des ersten Hebelarms (78,82) innerhalb des Aufnahmeraums (89,93) nach Art einer Kulisse führt.

3. Bedieneinheit nach Anspruch 2, **dadurch gekennzeichnet, dass** jede Gelenkaussparung (88) im Wesentlichen U-förmig ausgebildet ist.

4. Bedieneinheit nach einem der Ansprüche 1 bis 3, **dadurch gekennzeichnet, dass** das Bedienelement (20) eine im Wesentlichen rechteckige Kontur mit zwei Längsrändern und zwei Querrändern aufweist.

5. Bedieneinheit nach Anspruch 4, **dadurch gekennzeichnet, dass** die Stützelemente (44) entlang der beiden Querränder oder entlang der beiden Längsränder des Bedienelements (20) von diesem in Betätigungsrichtung (56) weisend abstehen.

6. Bedieneinheit nach einem der Ansprüche 1 bis 5, **dadurch gekennzeichnet, dass** jedes Stützelement zwei zueinander beabstandete Stützstäbe (48) aufweist, dass die vier Stützstäbe (48) wie die Ecken eines Vierecks angeordnet sind und von dem Bedienelement (20) in Betätigungsrichtung (56) weisend abstehen und dass jeder Stützstab eine Gelenkaussparung (88) aufweist.

7. Bedieneinheit nach Anspruch 6, **dadurch gekennzeichnet, dass** jedes Gelenkende (77,81) der ersten Hebelarme (78,82) des mindestens einen ersten Hebels (64) und des mindestens einen zweiten Hebels (66) zwei Gelenkendevorsprünge (75,79) aufweist, die in die Gelenkaussparungen (88) der Stützstäbe (48) der betreffenden Stützelemente (44) eingetaucht sind.

8. Bedieneinheit nach einem der Ansprüche 1 bis 7, **dadurch gekennzeichnet, dass** die zweiten Hebelarme (80,84) des mindestens einen ersten Hebels (64) und des mindestens einen zweiten Hebels (66) jeweils ein Gelenkende (83,85) aufweisen, wobei eines dieser beiden Gelenkenden (83,85) eine Gelenkaussparung (92) aufweist, in die das andere Gelenkende (83,85) unter Verhinderung einer Bewegung in Betätigungsrichtung (56) sowie entgegengesetzt dazu innerhalb der Gelenkaussparung (92) und unter Ermöglichung einer zur Betätigungsrichtung (56) orthogonalen Schiebebewegung eingetaucht ist.

9. Bedieneinheit nach einem der Ansprüche 1 bis 7, **dadurch gekennzeichnet, dass** die zweiten Hebelarme (80,84) des mindestens einen ersten Hebels (64) und des mindestens einen zweiten Hebels (66) jeweils ein Gelenkende (83,85) aufweisen, wobei diese beiden Gelenkenden (83,85) miteinander verzahnt sind.

10. Bedieneinheit nach einem der Ansprüche 1 bis 9, **dadurch gekennzeichnet, dass** der mindestens eine erste Hebel (64) und der mindestens eine zweite Hebel (66) jeweils plattenartig und torsionssteif ausgebildet sind.

11. Bedieneinheit nach einem der Ansprüche 1 bis 10, **dadurch gekennzeichnet, dass** die Lageranordnung (70) mehrere erste Lagerböcke (72) und mehrere zweite Lagerböcke (74) aufweist, wobei die ersten Lagerböcke (72) und die zweiten Lagerböcke (74) über die Länge der Schwenkachse (76) des betreffenden Hebels (64,66) verteilt angeordnet sind.

12. Bedieneinheit nach einem der Ansprüche 1 bis 11, **dadurch gekennzeichnet, dass** die Bedienoberfläche (18) des Bedienelements (20) ein Display (22) mit Berührungssensorik (24) und/oder ein Touch Pad mit Berührungssensorik und Symbolik zur Erkennung einer Berührung durch ein Betätigungsobjekt wie z.B. den Finger einer Hand aufweist.

13. Bedieneinheit nach Anspruch 12, **dadurch gekennzeichnet, dass** an dem Bedienelement (20) zusätzlich zu dem Display (22) mindestens eine Wipptaste (36) und/oder mindestens eine Drücktaste (40) und/oder mindestens ein Drehknopf und/oder mindestens ein Dreh-/Drücksteller (38) angeordnet ist oder sind.

14. Bedieneinheit nach einem der Ansprüche 1 bis 13, **dadurch gekennzeichnet, dass** das Bedienelement (20) in einer sich quer zur Betätigungsrichtung (56) erstreckenden Ebene gegen ungewollte Verschiebungen z.B. durch eine Nut-Feder- oder Zapfen-Lochaufnahme-Führung (61) gesichert geführt ist.

15. Bedieneinheit nach einem der Ansprüche 1 bis 14, **gekennzeichnet durch** ein Gehäuse mit einer Vorderseite mit einer Aussparung, in der das Bedienelement (20) angeordnet ist, wobei das Trägerelement (52) in und/oder an dem Gehäuse befestigt ist.

16. Bedieneinheit nach einem der Ansprüche 1 bis 15, **gekennzeichnet durch** ein Gehäuse (12), das an dem Trägerelement (52) befestigt ist.

17. Bedieneinheit nach einem der Ansprüche 1 bis 16, **gekennzeichnet durch**
- einen mechanischen Schalter (102) mit einem Schaltergehäuse (101) und einem Schalterbetätigungsorgan (103),
- wobei das Schaltergehäuse (101) auf der Oberseite oder an der Unterseite des Trägerelements (52) angeordnet und sein Schalterbetätigungsorgan (103, 53) von dem Bedienelement (20) bei dessen Bewegung aus der Ruheposition in die Funktionsauslöseposition betätigbar ist oder
- wobei das Schaltergehäuse (101) an der Unterseite des Trägerelements (52) angeordnet und sein Schalterbetätigungsorgan (103) durch einen der beiden miteinander in Verschwenkeingriff stehenden zweiten Hebelarme (80,84) betätigbar ist, oder
- wobei das Schaltergehäuse (101) an einem der beiden in Verschwenkeingriff miteinander stehenden zweiten Hebelarme (80,84) angeordnet und sein Schalterbetätigungsorgan (103) bei Bewegung des Betätigungselements aus der Ruheposition in die Funktionsauslöseposition durch das Trägerelement (52) betätigbar ist, oder
- wobei der Schalter (102) unterhalb eines der Stützelemente (44) angeordnet und sein Schalterbetätigungsorgan (103) bei Bewegung des Bedienelements (20) aus der Ruheposition in die Funktionsauslöseposition entweder von dem betreffenden Stützelement (44) oder einer in Verlängerung des betreffenden Stützelements (44) Gegenfläche betätigbar ist.

18. Bedieneinheit nach einem der Ansprüche 1 bis 16, **gekennzeichnet durch** eine Kinematikeinheit mit einem bei Bewegung des Bedienelements (20) aus der Ruheposition in die Funktionsauslöseposition mechanisch direkt oder indirekt bewegbaren Impulsanregungsorgan zur infolge einer mechanischen Bewegung erfolgenden Erzeugung mechanischer Energie und zur impulsartigen Freigabe dieser Energie unter direkter oder indirekter mechanischer Einwirkung auf das Bedienelement (20), wenn dieses seine Funktionsauslöseposition erreicht.

## Claims

1. An operating unit for a vehicle, comprising
- an operating element (20) having an operating surface (18), which operating element is guided movably in an actuating direction (56) from a rest position into a function-triggering position and back by means of depressing, and
- a parallel guiding device (68) for parallel guidance of the operating element (20) during its movement in the actuating direction (56) and in the opposite direction,
- the parallel guiding device (68) being provided with
- a carrier element (52) having an upper side facing the operating element (20) and a lower side facing away from the operating element (20),
- a lever assembly (62) having at least a first lever (64) and at least a second lever (66),
- a bearing assembly (70) having at least a first bearing block (72), on which the first lever (64) is pivotably mounted about a pivot axis (76) extending transversely to the actuating direction (56), and having at least one second bearing block (74), on which the second lever (66) is pivotably mounted about a pivot axis (76) extending transversely to the actuating direction (56),
- the pivot axes (76) of both levers (64, 66) being parallel to each other, and
- two opposing support elements (44) for the operating element (20), which protrude from the operating element (20) in the actuating direction (56)
- the lever assembly (62) and the bearing assembly (70) being located below the carrier element (52) as well as between the two support elements (44),
- each lever (64, 66) having a first lever arm (78, 82) extending from its pivot axis (76) and a second lever arm (80, 84) extending from its pivot axis (76) opposite to the first lever arm (78, 82),
- the first lever arm (78) of the at least one first lever (64) being received in an articulated manner by an articulated recess (88), provided with a recess opening (90), of the one support element (44),
**characterized in that**
- the first lever arm (82) of the at least one second lever (66) being received in an articulated manner by an articulated recess (92), provided with a recess opening (90), of the other support element (44), and
- the second lever arm (80, 84) of the at least one first lever (64) and the at least one second lever (66) being in pivoting engagement with each other,
- the two support elements (44) extend through passage openings (54) in the carrier element (52) and/or laterally past the carrier element (52) up to beyond its lower side,
- the articulated recesses (92) of both support elements (44) each have a geometry which, when the at least one first lever (64) and the at least one second lever (66) are pivoted within the articulated recess (88) by moving the actuating element, permits a sliding movement of the respective first lever arm (78, 82) in the direction of the recess opening (90) and in the opposite direction thereto and prevents a movement of the respective first lever arm (78, 82) within the articulated recess (88) in the actuating direction (56) of the actuating element and in the opposite direction thereto, and
- the operating element (20) is guided on the carrier element (52) in a plane extending transversely to the actuating direction (56) so as to be secured against undesired displacement, for example by a tongue-and-groove or pin-and-hole-receiving guide (61).

2. The operating unit according to claim 1, **characterized in that** each first lever arm (78, 82) has an articulated end (77, 81) received by one of the articulated recesses (88), and that each articulated recess (88) has a receiving space (89, 93) adjoining the recess opening (90), which encompasses the articulated end (77, 81) of the respective first lever arm (78, 82) for preventing movements of the articulated end (77, 81) of the first lever arm (78, 82) within the receiving space (89, 93) in the actuating direction (56) of the operating element (20) and in the opposite direction thereto and guides the articulated end (77, 81) of the respective first lever arm (78, 82) for permitting sliding movements of the articulated end (77, 81) of the first lever arm (78, 82) within the receiving space (89, 93) in the manner of a link.

3. The operating unit according to claim 2, **characterized in that** each articulated recess (88) is substantially U-shaped.

4. The operating unit according to any one of claims 1 to 3, **characterized in that** the operating element (20) has a substantially rectangular contour with two longitudinal edges and two transverse edges.

5. The operating unit according to claim 4, **characterized in that** the support elements (44) protrude along the two transverse edges or along the two longitudinal edges of the operating element (20) from the latter in actuating direction (56).

6. The operating unit according to any one of claims 1 to 5, **characterized in that** each support element comprises two support bars (48) spaced apart from each other, that the four support bars (48) are arranged like the corners of a square and protrude from the operating element (20) facing in the actuating direction (56), and that each support bar comprises an articulated recess (88).

7. The operating unit according to claim 6, **characterized in that** each articulated end (77, 81) of the first lever arms (78, 82) of the at least one first lever (64) and of the at least one second lever (66) comprises two articulated end protrusions (75,79) being plunged into the articulated recesses (88) of the support bars (48) of the respective support elements (44).

8. The operating unit according to any one of claims 1 to 7, **characterized in that** second lever arms (80, 84) of the at least one first lever (64) and of the at least one second lever (66) each have an articulated end (83, 85), one of these two articulated ends (83, 85) having an articulated recess (92) into which the other articulated end (83, 85) is plunged, preventing movement in the actuating direction (56) as well as in the opposite direction within the articulated recess (92) and allowing a sliding movement orthogonal to the actuating direction (56).

9. The operating unit according to any one of claims 1 to 7, **characterized in that** second lever arms (80, 84) of the at least one first lever (64) and of the at least one second lever (66) each have an articulated end (83, 85), wherein these two articulated ends (83, 85) are interlocked.

10. The operating unit according to any one of claims 1 to 9, **characterized in that** the at least one first lever (64) and the at least one second lever (66) are each formed to be plate-like and torsionally stiff.

11. The operating unit according to any one of claims 1 to 10, **characterized in that** the bearing assembly (70) comprises several first bearing blocks (72) and several second bearing blocks (74), wherein the first bearing blocks (72) and the second bearing blocks (74) are arranged distributed along the length of the pivot axis (76) of the respective lever (64, 66).

12. The operating unit according to any one of claims 1 to 11, **characterized in that** operating surface (18) of the operating element (20) comprises a display (22) with a touch sensor system (24) and/or a touch pad with a touch sensor system and symbolism for detecting a touch on the display by an actuating object such as the finger of a hand, for example.

13. The operating unit according to claim 12, **characterized in that** at least one rocker key (36) and/or at least one push key (40) and/or at least one rotary knob and/or at least one rotary/push adjuster (38) is or are arranged on the operating element (20) in addition to the display (22).

14. The operating unit according to any one of claims 1 to 13, **characterized in that** the operating element (20) is guided in a plane extending transversely to the actuating direction (56) so as to be secured against undesired displacement, for example by a tongue-and-groove or pin-and-hole-receiving guide (61).

15. The operating unit according to any one of claims 1 to 14, **characterized by** a housing having a front side with a recess in which the operating element (20) is arranged, the carrier element (52) being mounted in and/or to the housing.

16. The operating unit according to any one of claims 1 to 15, **characterized by** a housing (12) mounted to the carrier element (52).

17. The operating unit according to any one of claims 1 to 16, **characterized by**
- a mechanical switch (102) having a switch housing (101) and a switch actuating member (103),
- wherein the switch housing (101) is arranged on the upper side or on the lower side of the carrier element (52) and its switch actuating member (103, 53) is adapted to be actuated by the operating element (20) upon its movement from the rest position into the function-triggering position, or
- wherein the switch housing (101) is arranged on the lower side of the carrier element (52) and its switch actuating member (103) is adapted to be actuated by one of the two second lever arms (80, 84) being in pivoting engagement with each other, or
- wherein the switch housing (101) is arranged on one of the two second lever arms (80, 84) being in pivoting engagement with each other and its switch actuating member (103) is adapted to be actuated upon movement of the operating element from the rest position into the function-triggering position by means of the carrier element (52), or
- wherein the switch (102) is arranged below one of the support element (44) and its switch actuating member (103) is adapted to be actuated upon movement of the operating element (20) from the rest position into the function-triggering position either by the respective support element (44) or by a counterface in extension of the respective support element (44).

18. The operating unit according to any one of claims 1 to 16, **characterized by** a kinematic unit with a pulse excitation member that can be moved mechanically, directly or indirectly, when the operating element (20) is moved from the rest position into the function triggering position, for generating mechanical energy as a result of a mechanical movement and for releasing this energy in a pulse-like manner under direct or indirect mechanical action on the operating element (20) when the operating element reaches its function-triggering position.

## Revendications

1. Unité de commande pour véhicule, dotée
- d'un élément de commande (20) comportant une surface de commande (18), lequel est guidé dans une direction d'actionnement (56) par enfoncement depuis une position de repos jusqu'à une position de déclenchement de fonction et inversement, et
- d'un dispositif de guidage parallèle (68) destiné au guidage parallèle de l'élément de commande (20) lors du mouvement de celui-ci dans la direction d'actionnement (56) et dans la direction opposée,
- dans laquelle le dispositif de guidage parallèle (68) est prévu comme doté
o d'un élément porteur (52), lequel comporte une face supérieure tournée vers l'élément de commande (20) et une face inférieure se détournant de l'élément de commande (20),
o d'un arrangement de levier (62) avec au moins un premier levier (64) et avec au moins un deuxième levier (66),
o d'un arrangement de palier (70) avec au moins un premier bloc de palier (72), sur lequel le premier levier (64) est monté de manière pivotante autour d'un axe de pivot (76) transversal par rapport à la direction d'actionnement (56), et au moins un deuxième bloc de palier (74), sur lequel le deuxième levier (66) est monté de manière pivotante autour d'un axe de pivot (76) transversal par rapport à la direction d'actionnement (56),
o dans laquelle les axes de pivot (76) des deux leviers (64, 66) sont parallèles, et
o de deux éléments de support (44) opposés l'un à l'autre pour l'élément de commande (20), lesquels dépassant de l'élément de commande (20) dans la direction d'actionnement (56),
o dans laquelle l'arrangement de levier (62) et l'arrangement de palier (70) se trouvent en-dessous de l'élément porteur (52) et entre les deux éléments de support (44),
o dans laquelle chaque levier (64, 66) comporte un premier bras de levier (78, 82) s'étendant depuis son axe de pivot (76) et un deuxième bras de levier (80, 84) s'étendant depuis son axe de pivot (76) à l'opposé du premier bras de levier (78, 82) et
o dans laquelle le premier bras de levier (78) de l'au moins un premier levier (64) est accueilli de manière articulée par un évidement d'articulation (88), prévu avec une ouverture d'évidement (90), de l'un élément de support (44),
**caractérisée en ce que**
- le premier bras de levier (82) de l'au moins un deuxième levier (66) est accueilli de manière articulée par un évidement d'articulation (92), prévu avec une ouverture d'évidement (90), de l'autre élément de support (44),
- les deuxièmes bras de levier (80, 84) de l'au moins un premier levier (64) et de l'au moins un deuxième levier (66) sont mutuellement en prise pivotante,
- les deux éléments de support (44) s'étendent à travers des ouvertures de passage (54) dans l'élément porteur (52) et/ou latéralement sur l'élément porteur (52) jusqu'au-delà de sa face inférieure,
- les évidements d'articulation (92) des deux éléments de support (44) comportent respectivement une géométrie qui autorise, lors d'un pivotement de l'au moins un premier levier (64) et de l'au moins un deuxième levier (66) à l'intérieur de l'évidement d'articulation (88) résultant d'un déplacement de l'élément d'actionnement, un mouvement de glissement du premier bras de levier concerné (78, 82) en direction de l'ouverture d'évidement (90) et dans la direction opposée et empêche un mouvement du premier bras de levier concerné (78, 82) à l'intérieur de l'évidement d'articulation (88) dans la direction d'actionnement (56) de l'élément d'actionnement et dans la direction opposée, et
- l'élément de commande (20) est guidé sur l'élément porteur (52) dans un plan transversal à la direction d'actionnement (56) de manière sécurisée contre des déplacements intempestifs, par exemple par un guidage rainure-ressort ou tenon-mortaise.

2. Unité de commande selon la revendication 1, **caractérisée en ce que** chacun des premiers bras de levier (78, 82) comporte une extrémité d'articulation (77, 81) accueillie par un des évidements d'articulation (88) et **en ce que** chaque évidement d'articulation (88) comporte un espace d'accueil (88, 93) se rattachant à l'ouverture d'évidement (90), lequel entoure l'extrémité d'articulation (77, 81) du premier bras de levier concerné (78, 82) afin d'empêcher tout mouvement de l'extrémité d'articulation (77, 81) du premier bras de levier (78, 82) à l'intérieur de l'espace d'accueil (89, 93) dans la direction d'actionnement (56) de l'élément de commande (20) et dans la direction opposée et guide l'extrémité d'articulation (77, 81) du premier bras de levier concerné (78, 82) à la manière d'une coulisse afin de permettre les mouvements de glissement de l'extrémité d'articulation (77, 81) du premier bras de levier (78, 82) à l'intérieur de l'espace d'accueil (89, 93).

3. Unité de commande selon la revendication 2, **caractérisée en ce que** chaque évidement d'articulation (88) est sensiblement en forme de U.

4. Unité de commande selon l'une des revendications 1 à 3, **caractérisée en ce que** l'élément de commande (20) comporte un contour sensiblement rectangulaire avec deux bords longitudinaux et deux bords transversaux.

5. Unité de commande selon la revendication 4, **caractérisée en ce que** les éléments de support (44) dépassent de l'élément de commande (20) en étant orientés vers la direction d'actionnement (56) le long des deux bords transversaux ou le long des deux bords longitudinaux.

6. Unité de commande selon l'une des revendications 1 à 5, **caractérisée en ce que** chaque élément de support comporte deux barres de support (48) à distance l'une de l'autre, **en ce que** les quatre barres de support (48) sont disposées comme les coins d'un rectangle et dépassent de l'élément de commande (20) en étant orientés vers la direction d'actionnement (56) et **en ce que** chaque barre de support comporte un évidement d'articulation (88).

7. Unité de commande selon la revendication 6, **caractérisée en ce que** chaque extrémité d'articulation (77, 81) du premier bras de levier (78, 82) de l'au moins un premier levier (64) et de l'au moins un deuxième levier (66) comporte deux saillies d'extrémité (75, 79), lesquelles plongent dans les évidements d'articulation (88) des barres de support (48) des éléments de support concernés (44) .

8. Unité de commande selon l'une des revendications 1 à 7, **caractérisée en ce que** les deuxièmes bras de levier (80, 84) de l'au moins un premier levier (64) et de l'au moins un deuxième levier (66) comportent respectivement une extrémité d'articulation (83, 85), dans laquelle une de ces deux extrémités d'articulation (83, 85) comporte un évidement d'articulation (92), à l'intérieur duquel l'autre extrémité d'articulation (83, 85) plonge tout en prévenant un mouvement dans la direction d'actionnement (56) ainsi que dans la direction opposée à l'intérieur de l'évidement d'articulation (92) et tout en permettant un mouvement de glissement orthogonal à la direction d'actionnement (56).

9. Unité de commande selon l'une des revendications 1 à 7, **caractérisée en ce que** les deuxièmes bras de levier (80, 84) de l'au moins un premier levier (64) et de l'au moins un deuxième levier (66) comportent respectivement une extrémité d'articulation (83, 85), dans laquelle ces deux extrémités d'articulation (83, 85) sont engrenées l'une dans l'autre.

10. Unité de commande selon l'une des revendications 1 à 9, **caractérisée en ce que** l'au moins un premier levier (64) et l'au moins un deuxième levier (66) sont respectivement réalisés de type plaque et rigides en torsion.

11. Unité de commande selon l'une des revendications 1 à 10, **caractérisée en ce que** l'arrangement de palier (70) comporte plusieurs premières barres de palier (72) et plusieurs deuxièmes barres de palier (74), dans laquelle les premières barres de palier (72) et les deuxièmes barres de palier (74) sont réparties tout le long de l'axe de pivot (76) du levier concerné (64, 66).

12. Unité de commande selon l'une des revendications 1 à 11, **caractérisée en ce que** la surface de commande (18) de l'élément de commande (20) comporte un écran (22) doté de capteurs de toucher (24) et/ou un pavé tactile doté de capteurs de toucher et de symboles afin de reconnaître un toucher par un objet d'actionnement comme par exemple le doigt d'une main.

13. Unité de commande selon la revendication 12, **caractérisée en ce que**, outre l'écran (22), au moins une touche à bascule (36) et/ou au moins un bouton-poussoir (40) et/ou au moins une molette et/ou au moins un actuateur rotatif/à pression (38) est ou sont disposé(s) sur l'élément de commande (20).

14. Unité de commande selon l'une des revendications 1 à 13, **caractérisée en ce que** l'élément de commande (20) est guidé dans un plan transversal à la direction d'actionnement (56) de manière sécurisée contre des déplacements intempestifs, par exemple par un guidage rainure-ressort ou tenon-mortaise (61).

15. Unité de commande selon l'une des revendications 1 à 14, **caractérisée par** un boîtier doté d'une face avant avec un évidement à l'intérieur duquel est disposée l'unité de commande (20), dans laquelle l'élément porteur (52) est fixé dans et/ou sur le boîtier.

16. Unité de commande selon l'une des revendications 1 à 15, **caractérisée par** un boîtier (12), lequel est fixé sur l'élément porteur (52).

17. Unité de commande selon l'une des revendications 1 à 16, **caractérisée par**
- un commutateur mécanique (102) doté d'un boîtier de commutateur (101) et d'un organe d'actionnement de commutateur (103),
- dans laquelle le boîtier de commutateur (101) est disposé sur la face supérieure ou sur la face inférieure de l'élément porteur (52) et son organe d'actionnement de commutateur (103, 53) est actionnable par l'élément de commande (20) lors du mouvement de celui-ci de la position de repos à la position de déclenchement de fonction ou
- dans laquelle le boîtier de commutateur (101) est disposé sur la face inférieure de l'élément porteur (52) et son organe d'actionnement de commutateur (103) est actionnable par un des deux deuxièmes bras de levier (80, 84) mutuellement en prise pivotante, ou
- dans laquelle le boîtier de commutateur (101) est disposé sur un des deux deuxièmes bras de levier (80, 84) mutuellement en prise pivotante et son organe d'actionnement de commutateur (103) est actionnable par l'élément porteur (52) lors du mouvement de l'élément d'actionnement de la position de repos à la position de déclenchement de fonction ou
- dans laquelle le commutateur (102) est disposé en-dessous d'un des éléments de support (44) et son organe d'actionnement de commutateur (103) est actionnable ou bien par l'élément de support concerné (44) ou par une contre-surface dans le prolongement de l'élément de support concerné (44) lors du mouvement de l'élément d'actionnement de la position de repos à la position de déclenchement de fonction.

18. Unité de commande selon l'une des revendications 1 à 16, **caractérisée par** une unité cinématique dotée d'un organe de régulation d'impulsion pouvant être mécaniquement déplacé directement ou indirectement lors du mouvement de l'élément de commande (20) de la position de repos à la position de déclenchement de fonction, destiné à générer une énergie mécanique résultant d'un déplacement mécanique et à libérer cette énergie sous forme d'impulsion pour mécaniquement agir directement ou indirectement sur l'élément de commande (20) lorsque celui-ci atteint sa position de déclenchement de fonction.
